# EUROPEAN PATENT SPECIFICATION

(11) **EP 3 673 781 B1**
(45) Date of publication and mention of the grant of the patent: **27.10.2021**
(21) Application number: 18849078.3
(22) Date of filing: 17.08.2018
(51) Int. Cl.: A47L 1/02

(54) **MULTI-MEDIA INTELLIGENT CLEANING DEVICE AND CONTROL METHOD**
INTELLIGENTE MULTIMEDIA-REINIGUNGSVORRICHTUNG UND STEUERVERFAHREN
DISPOSITIF DE NETTOYAGE INTELLIGENT MULTIMÉDIA ET PROCÉDÉ DE COMMANDE

(30) Priority: 25.08.2017 CN 201710743993
(43) Date of publication of application: 01.07.2020
(60) Divisional application: 21196844.1
(73) Proprietor: Ecovacs Robotics Co., Ltd., Suzhou, Jiangsu 215168 (CN)
(72) Inventor: CHEN, Qi, Jiangsu 215131 (CN)
(74) Representative: Viering, Jentschura & Partner mbB Patent- und Rechtsanwälte
(86) International application number: PCT/CN2018/101118
(87) International publication number: WO 2019/037667

(56) References cited:
- EP-A2- 2 617 337
- CN-A- 104 146 650
- CN-A- 104 146 650
- CN-U- 201 717 506
- CN-U- 206 218 048
- CN-U- 206 261 541
- CN-U- 206 261 541
- CN-Y- 201 404 156
- KR-A- 20120 035 797
- KR-A- 20130 031 607
- US-A1- 2015 223 653

## Description

### TECHNICAL FIELD

The present disclosure relates to a multi-medium intelligent cleaning apparatus and a control method, in particular to a cleaning apparatus for cleaning walls, windows, solar panels and the like.

### BACKGROUND ART

In the existing cleaning robot for cleaning a vertical wall surface, besides a robot body, a safety protection apparatus connected to the robot body needs to be arranged, for example, a safety buckle connected to the robot body through a safety rope. A potential safety hazard that the robot is damaged or smashed to pedestrians after falling is prevented. When the safety protection apparatus includes an adsorption member and needs to clean a vertical wall surface such as a large floor window, the adsorption member and the robot are located on the same working surface. With this arrangement, it is possible to cause the robot to collide with the adsorption member to make the robot or the adsorption member to be separated, resulting in danger. Alternatively, when the adsorption member and the robot are located on different adsorption surfaces, and a child plays or other objects inadvertently collide with the adsorption member to cause the adsorption member to fall off, the safety protection apparatus cannot continue to play a protective role against falling of the robot. The document CN 104 146 650 A discloses a multi-medium intelligent cleaning apparatus and a method according to the preambles of device claim 1 and method claim 15.

In view of this, it is necessary to improve the existing cleaning robot to solve the above problems.

### SUMMARY

An objective of the present disclosure is to provide a multi-medium intelligent cleaning apparatus and a control method, which are used for solving the problem in the prior art of separation of an adsorption member caused by collision of a foreign object with the adsorption member.

To achieve the above objective, the present disclosure provides a multi-medium intelligent cleaning apparatus for cleaning a working surface. The multi-medium intelligent cleaning apparatus includes a self-propelled cleaning robot and a safety protection apparatus connected to the self-propelled cleaning robot through a connecting member. The safety protection apparatus includes an adsorption member for adsorbing on a surface to be adsorbed. The multi-medium intelligent cleaning apparatus further includes an anti-collision member arranged on the adsorption member. The anti-collision member protrudes from an outer end edge of the adsorption member so as to prevent a foreign object from impacting the adsorption member.

As a further improvement of the present disclosure, a cross section of the anti-collision member and a cross section of the adsorption member are circular, and a diameter of the anti-collision member is larger than a diameter of the adsorption member.

As a further improvement of the present disclosure, the cross section of the adsorption member is polygonal, and an outer edge of the anti-collision member protrudes from the outer end edge of the adsorption member.

As a further improvement of the present disclosure, the sclf-propcllcd cleaning robot includes a movable bumper and a first sensor connected to the movable bumper to generate a signal when the movable bumper shifts.

As a further improvement of the present disclosure, the anti-collision member is used in cooperation with the movable bumper to abut against the movable bumper to enable the movable bumper to shift when the self-propelled cleaning robot approaches the adsorption member.

As a further improvement of the present disclosure, a height of an upper surface of the movable bumper from the working surface is H1; a height of a lower surface of the movable bumper from the working surface is H2; a height of an upper surface of the anti-collision member from the surface to be adsorbed is H3; and a height of a lower surface of the anti-collision member from the surface to be adsorbed is H4, where H2 ≤ H3 ≤ H1, or H2 ≤ H4 ≤ H1.

As a further improvement of the present disclosure, the multi-medium intelligent cleaning apparatus further includes a fixing assembly for detachably fixing the anti-collision member on the adsorption member.

As a further improvement of the present disclosure, the fixing assembly includes a clamping portion arranged on the adsorption member and a buckle portion arranged on the anti-collision member.

As a further improvement of the present disclosure, there are two clamping portions which are arranged on the adsorption member and are in mirror symmetry with respect to a symmetry axis of the adsorption member; and there are two buckle portions which are arranged on the anti-collision member and are in positional correspondence with the two clamping portions respectively.

As a further improvement of the present disclosure, the connecting member is a safety rope, and the multi-medium intelligent cleaning apparatus further includes a retracting member fixed with the adsorption member and is used for retracting the safety rope. As a further improvement of the present disclosure, the outer end edge of the adsorption member protrudes upwards to form a handle, and the handle is able to drive the outer end edge of the adsorption member to be separated from the adsorption surface under the action of an external force of a user.

As a further improvement of the present disclosure, the anti-collision member is provided with a yielding groove for yielding the handle.

As a further improvement of the invention, a middle part of the handle is provided with a through hole for facilitating finger insertion of the user.

As a further improvement of the present disclosure, the self-propelled cleaning robot of the multi-medium intelligent cleaning apparatus is a glass cleaning robot or a solar panel cleaning robot.

As a further improvement of the present disclosure, the multi-medium intelligent cleaning apparatus further includes: a second sensor for detecting, when the anti-collision member is subjected to a collision force, a magnitude of the collision force, and a control module connected to the second sensor.

Where the control module is configured to control the self-propelled cleaning robot to stop working, turn or give an alarm when the collision force detected by the second sensor is greater than a threshold.

As a further improvement of the present disclosure, there are at least two second sensors uniformly distributed on a bearing surface of the anti-collision member.

The present disclosure also provides a control method of a multi-medium intelligent cleaning apparatus. The multi-medium intelligent cleaning apparatus includes a self-propelled cleaning robot and a safety protection apparatus connected to the self-propelled cleaning robot through a connecting member. The safety protection apparatus includes an adsorption member for adsorbing on a surface to be adsorbed. Correspondingly, the control method of the multi-medium intelligent cleaning apparatus includes:
when an anti-collision member that is arranged on the adsorption member and protrudes from an outer end edge of the adsorption member is subjected to a collision force, determining a magnitude of the collision force based on a detection signal generated by a second sensor; and
when the collision force is greater than a threshold, controlling the self-propelled cleaning robot to stop working, turn or give an alarm.

As a further improvement of the present disclosure, the method may further include the following steps:
when a movable bumper of the self-propelled cleaning robot shifts due to collision, determining that the self-propelled cleaning robot collides with an obstacle based on a signal generated by a first sensor; and
controlling the self-propelled robot to perform turning or retreating actions. According to the multi-medium intelligent cleaning apparatus, an anti-collision member is arranged on an adsorption member, so that the possibility that the adsorption member falls off due to impact of a foreign object is reduced. The multi-medium intelligent cleaning apparatus is safe and convenient to use and is not easy to fall.

In addition, according to the control method of the multi-medium intelligent cleaning apparatus provided by the present disclosure, by detecting the magnitude of a collision force subjected by an anti-collision member, a self-propelled cleaning robot is controlled to stop working when the collision force is too large, so that the probability that the adsorption member is separated from an adsorption surface due to the too large collision force may be reduced, and the working safety of the self-propelled cleaning robot may be improved.

### BRIEF DESCRIPTION OF THE DRAWINGS

The accompanying drawings illustrated herein are used to provide a further understanding of the present disclosure and constitute a part of the present application, and illustrate embodiments of the present application and together with the description serve to explain the present application and are not to be construed as unduly limiting the present application. In the drawings:
FIG. 1 is a schematic structural view of a self-propelled cleaning robot of a multi-medium intelligent cleaning apparatus of the present disclosure;
FIG. 2 is a schematic assembled view of structures of the multi-medium intelligent cleaning apparatus of the present disclosure except for the self-propelled cleaning robot;
FIG. 3 is a schematic exploded view of structures of the multi-medium intelligent cleaning apparatus of the present disclosure except for the self-propelled cleaning robot;
FIG. 4 is a schematic working view of the multi-medium intelligent cleaning apparatus of the present disclosure;
FIG. 5 is a schematic structural view of an adsorption member in the multi-medium intelligent cleaning apparatus of the present disclosure;
FIG. 6 is a schematic structural view of an anti-collision member in the multi-medium intelligent cleaning apparatus of the present disclosure; and
FIG. 7 is a flow chart of a control method of a multi-medium intelligent cleaning apparatus of the present disclosure.

### DETAILED DESCRIPTION OF EXAMPLE EMBODIMENTS

For the objectives, technical solutions, and advantages of the present application to become more fully apparent, the technical solutions of the present application will be clearly and completely described below with reference to specific embodiments of the present application and the accompanying drawings.

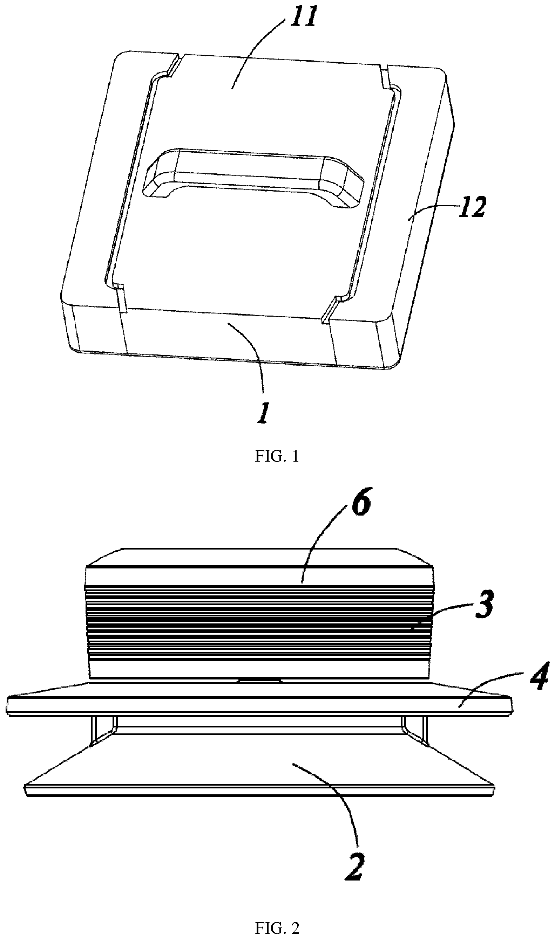

As shown in FIGs. 1 to 3, a multi-medium intelligent cleaning apparatus is used for cleaning a working surface. The multi-medium intelligent cleaning apparatus includes a self-propelled cleaning robot 1 and a safety protection apparatus connected to the self-propelled cleaning robot 1 through a connecting member 3. The safety protection apparatus includes an adsorption member 2 for adsorbing on a surface to be adsorbed. The multi-medium intelligent cleaning apparatus further includes an anti-collision member 4 arranged on the adsorption member 2, a fixing assembly 5 for detachably fixing the anti-collision member 4 on the adsorption member 2, and a retracting member 6 fixed with the adsorption member 2.

The self-propelled cleaning robot 1 of the multi-medium intelligent cleaning apparatus may be a glass cleaning robot or a solar panel cleaning robot, etc.

In the present embodiment, the adsorption member 2 is a suction cup, and the working surface may be a window, a wall, a solar panel and the like, and is mainly a plane having a certain inclination angle with the horizontal ground or a curved surface having a certain radian.

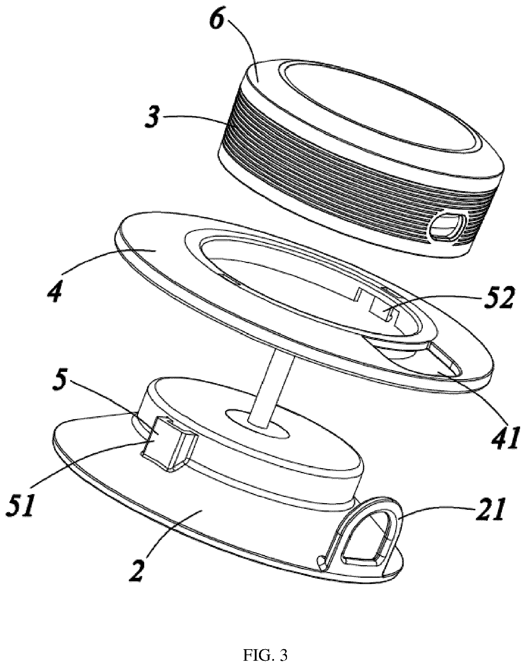

As shown in FIGs. 2 and 3, the anti-collision member 4 protrudes from an outer end edge of the adsorption member 2 to prevent the self-propelled cleaning robot 1 from impacting the adsorption member 2. A cross section of the anti-collision member 4 and a cross section of the adsorption member 2 are circular. In an implementable technical solution, as shown in FIG. 3, the anti-collision member 4 and the adsorption member 2 may be arranged coaxially. A diameter of the anti-collision member 4 is greater than a diameter of the adsorption member 2. Of course, the anti-collision member 4 may be formed in other shapes, such as a polygonal shape, as long as the outer edge thereof protrudes from an outer edge of an end portion of the adsorption member 2. Specifically, as shown in FIG. 3, in the present embodiment, the anti-collision member 4 employs an anti-collision ring that is sleeved on an upper portion of the adsorption member 4. It is to be noted that various other configurations of the anti-collision member 4 are also possible. For example, the anti-collision member may be formed as a cover covering the adsorption member 2, or the anti-collision member may be formed as a fence structure. The anti-collision member 4 is preferably made of a rigid material to improve impact resistance.

The anti-collision member 4 protrudes from the adsorption member 2, so that when the self-propelled cleaning robot 1 is about to collide with the adsorption member 2, the self-propelled cleaning robot 1 is abutted against, and falling off of the adsorption member 2 caused by the fact that the self-propelled cleaning robot 1 directly collides with the adsorption member 2 is prevented.

As shown in FIG. 1, the self-propelled cleaning robot 1 includes a cleaning body 11, an adsorption assembly for adsorbing the cleaning body 11 on the working surface, a driving assembly for allowing the cleaning body 11 to walk, a movable bumper 12 arranged on one side of the cleaning body 11, a first sensor for connecting to the movable bumper 12 to generate a signal when the movable bumper 12 shifts, and a control unit (such as a CPU). The driving assembly is connected to the control unit, and the first sensor is connected to the control unit.

When the self-propelled cleaning robot 1 walks, if colliding with an obstacle, the movable bumper 12 generates a certain shift relative to the cleaning body 11. At this time, the first sensor senses the shift of the movable bumper 12 and transmits a signal to the control unit, and the control unit determines that the self-propelled cleaning robot 1 collides with the obstacle, and controls the self-propelled cleaning robot 1 to turn or retreat so as to avoid the obstacle and continue walking.

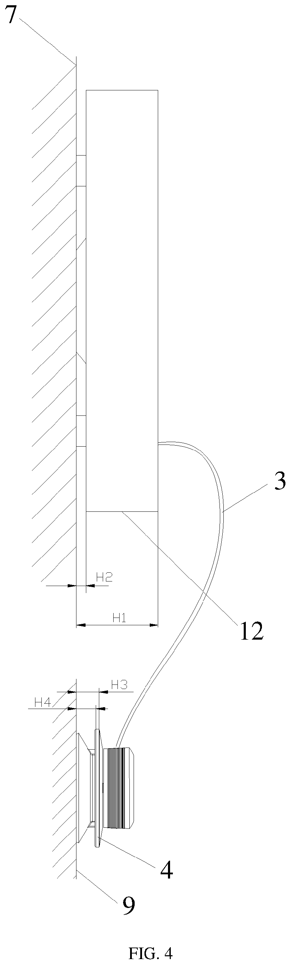

The anti-collision member 4 is matched with the height of the movable bumper 12, i.e. the anti-collision member 4 is located at a location where the anti-collision member 4 may abut against the movable bumper 12 to enable the movable bumper 12 to shift when the self-propelled cleaning robot 1 approaches the adsorption member 2. Specifically, as shown in FIG. 4, a height of an upper surface of the movable bumper 12 from a working surface 7 is H1; a height of a lower surface of the movable bumper 12 from the working surface 7 is H2; a height of an upper surface of the anti-collision member 4 from a surface to be adsorbed 9 is H3; and a height of a lower surface of the anti-collision member 4 from the surface to be adsorbed 9 is H4, where H2 ≤ H3 ≤ H1, or H2 < H4 ≤ H1.

Here it is to be noted that the working surface 7 and the surface to be adsorbed 9 may be the same surface or different surfaces.

When the working surface 7 and the surface to be adsorbed 9 are the same surface, the adsorption member 2 is adsorbed on a cleaning working surface of the self-propelled cleaning robot 1. If the self-propelled cleaning robot 1 is close to the adsorption member 2, the movable bumper 12 firstly collides with the anti-collision member 4 and generates a certain shift. At this time, the first sensor senses that the movable bumper 12 shifts, and the self-propelled cleaning robot 1 retreats for a distance according to a detection result and then continues to walk. Therefore, the self-propelled cleaning robot 1 may be prevented from impacting the adsorption member 2 and climbing along the adsorption member 2, so that the adsorption member 2 or the sclf-propcllcd cleaning robot 1 is separated from the working surface. For example, when the self-propelled cleaning robot is adsorbed to the work surface through an adsorption unit at the bottom thereof, when the self-propelled cleaning robot climbs along the adsorption member 2, the adsorption unit leaks air to cause the self-propelled cleaning robot to fall from the work surface.

When the working surface 7 and the surface to be adsorbed are different surfaces, it indicates that the adsorption member 2 does not adsorb on the cleaning working surface of the self-propelled cleaning robot 1. For example, a user adsorbs the adsorption member 2 on the other side of window glass or adsorbs the adsorption member 2 on a wall surface near a window. At this time, the anti-collision member 4 may also play a good protective role, such as preventing children from playing or other objects from unintentionally colliding with the adsorption member 2 to cause the adsorption member 2 to fall off.

As shown in FIG. 3, the fixing assembly 5 includes a clamping portion 51 arranged on the adsorption member 2 and a buckle portion 52 arranged on the anti-collision member 4. In a specific implementation, at least two the fixing assemblies 5 may be provided. For example, the quantity of the clamping portions 51 is two, and the two clamping portions 51 are arranged on the adsorption member 2 and are in mirror symmetry with respect to a symmetry axis of the adsorption member 2. Correspondingly, the quantity of the buckle portions 52 is two, and the two buckle portions 52 are arranged on the anti-collision member 4 and are in positional correspondence with the two clamping portions 51 respectively. Of course, the anti-collision member 4 may also be detachably arranged on the adsorption member 2 by other means, such as by screwing.

In the present embodiment, the anti-collision member 4 is set to be detachable, so that when the adsorption member 2 and the self-propelled cleaning robot 1 work on the same working surface, the anti-collision member 4 is installed on the adsorption member 2. If the adsorption member 2 does not have a risk of touching the self-propelled cleaning robot 1, the anti-collision member 4 may be removed.

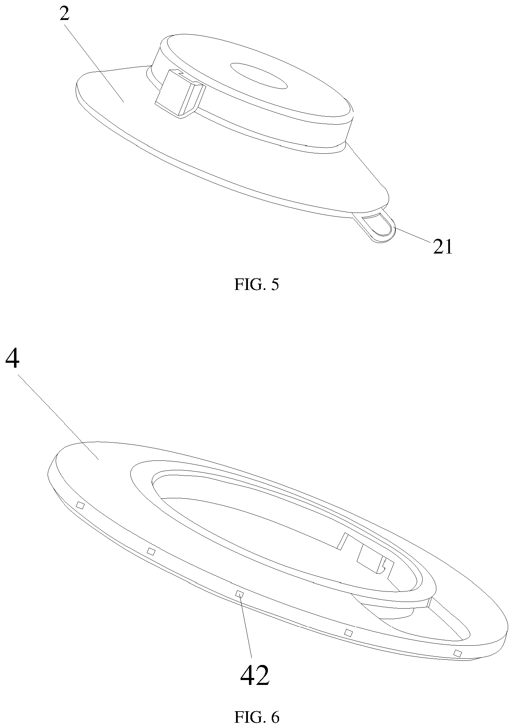

As shown in FIG. 3, the connecting member 3 is a safety rope, and the retracting member 6 is fixed with the adsorption member 2 and is used for retracting the safety rope. A handle 21 is formed at the outer end edge of the adsorption member 2. Specifically, as shown in FIG. 3, the outer end edge of the adsorption member 2 protrudes upwards to form a handle 21, and the anti-collision member 4 is provided with a yielding groove 41 for yielding the handle 21. The handle 21 facilitates grasping by the user to separate the adsorption member 2 from the surface to be adsorbed. As shown in FIG. 3, the handle 21 is provided with a through hole, a user's finger is inserted into the through hole and then bent with a certain arc, and the outer end edge of the adsorption member 2 may be easily separated from the adsorption surface by applying a certain pulling force, so that the safety protection apparatus may be conveniently taken down. Or, as shown in FIG. 5, the handle 21 extending outwards is formed at the outer end edge of the adsorption member 2. By adopting the structure shown in FIG. 5, the anti-collision member 4 does not need to be provided with a yielding groove. Also, the handle 21 may be provided with a through hole to facilitate grasping by the user.

According to the multi-medium intelligent cleaning apparatus, the anti-collision member 4 is arranged on the adsorption member 2, so that separation of the anti-collision member 4 or the self-propelled cleaning robot 1 caused by the fact that the self-propelled cleaning robot 1 collides with the anti-collision member 4 is prevented, and the adsorption member 2 may also be prevented from being separated by being collided by a foreign object. By setting the anti-collision member 4 to be detachable, the anti-collision member 4 may be detached when not used, and the adsorption capacity of the adsorption member 2 is improved. The multi-medium intelligent cleaning apparatus is safe and convenient to use and is not easy to fall.

As shown in FIG. 6, the multi-medium intelligent cleaning apparatus provided by an embodiment of the present disclosure may further include: a second sensor 42 for detecting, when the anti-collision member 4 is subjected to a collision force, the magnitude of the collision force, and a control module connected to the second sensor 42. The control module is configured to control the self-propelled cleaning robot to stop working, turn or give an alarm when the collision force detected by the second sensor 42 is greater than a threshold. It is to be noted that the control module may be a control unit (such as a CPU) arranged on the multi-medium intelligent cleaning apparatus, or a control member installed on the adsorption member 2. As shown in FIG. 6, the second sensors 42 may be plural, and at least two second sensors 42 may be uniformly distributed on a bearing surface of the anti-collision member. For example, as shown in FIG. 6, the anti-collision member is in the shape of a circular disk, and the anti-collision member is provided with one second sensor 42 at intervals of a center angle (e.g., 30 degrees, 45 degrees, etc.). In an embodiment of the present disclosure, the quantity of the arranged second sensor is not specifically limited. In a specific implementation, the quantity of the arranged second sensor may be selected according to an actual size of the anti-collision member, the attributes of the selected second sensors and the like.

In an embodiment of the present disclosure, by detecting the magnitude of a collision force subjected by an anti-collision member, a self-propelled cleaning robot is controlled to stop working, turn or give an alarm when the collision force is too large, so that the probability that the adsorption member is separated from an adsorption surface due to the too large collision force may be reduced, and the working safety of the self-propelled cleaning robot may be improved. For example, the working surface of the self-propelled cleaning robot 1 and the surface to be adsorbed of the adsorption member 2 are the same surface, the control module is a control unit arranged on the self-propelled cleaning robot 1, when the collision force or other external forces of the self-propelled robot to which the collision prevention member 4 on the adsorption member 2 is subjected is greater than a threshold, the adsorption member 2 does not adsorb the surface to be adsorbed any more, and the effect of safety protection cannot be achieved. At this time, the control unit controls the self-propelled robot to give an alarm or stop working. For another example, the working surface of the self-propelled cleaning robot 1 and the surface to be adsorbed of the adsorption member 2 are different surfaces, the control module is a control member 2 arranged on the adsorption member 2, and when an external force (for example, a child accidentally touches the adsorption member 2) to which the anti-collision member 4 on the adsorption member 2 is subjected is greater than a threshold, the adsorption member 2 docs not adsorb the surface to be adsorbed any more, and the effect of safety protection cannot be achieved. At this time, the control member sends information to the self-propelled robot, so that the control unit controls the self-propelled robot to give an alarm or stop working, or the adsorption member 2 gives an alarm.

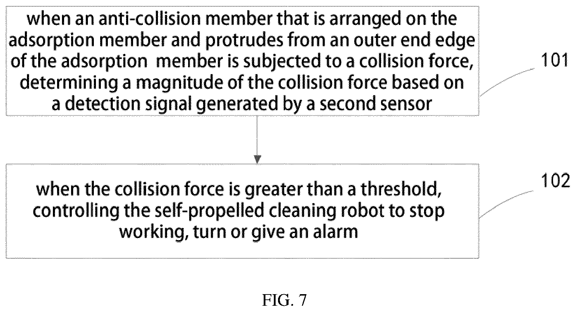

As shown in FIG. 7, another embodiment of the present disclosure provides a control method of a multi-medium intelligent cleaning apparatus. The multi-medium intelligent cleaning apparatus includes a self-propelled cleaning robot and a safety protection apparatus connected to the self-propelled cleaning robot through a connecting member. The safety protection apparatus includes an adsorption member for adsorbing on a surface to be adsorbed. The execution body of the method provided by the present embodiment may be a control module of the self-propelled cleaning robot. Specifically, as shown in the flowchart of FIG. 7, the method includes the following steps:
101: when an anti-collision member that is arranged on the adsorption member and protrudes from an outer end edge of the adsorption member is subjected to a collision force, determining a magnitude of the collision force based on a detection signal generated by a second sensor; and
102: when the collision force is greater than a threshold, controlling the self-propelled cleaning robot to stop working, turn or give an alarm.

In the above 101, the arrangement solution of the anti-collision member may be referred to the corresponding contents in the above-mentioned embodiment, and will not be described in detail here.

In the above 102, the threshold may be determined based on the adsorption force attribute of the adsorption member. For example, when the adsorption force of the adsorption member is large, the threshold may be set to a larger value, and when the adsorption force of the adsorption member is small, the threshold may be set to a smaller value. The embodiments of the present disclosure are not particularly limited to setting the threshold.

According to the control method of the multi-medium intelligent cleaning apparatus provided by the present disclosure, by detecting the magnitude of a collision force subjected by an anti-collision member, a self-propelled cleaning robot is controlled to stop working, turn or give an alarm when the collision force is too large, so that the probability that the adsorption member is separated from an adsorption surface due to the too large collision force may be reduced, and the working safety of the self-propelled cleaning robot may be improved.

Furthermore, the method provided by the embodiment of the present disclosure may further include the following steps:
103: when a movable bumper of the self-propelled cleaning robot shifts due to collision, determining that the self-propelled cleaning robot collides with an obstacle based on a signal generated by a first sensor; and
104: controlling the self-propelled robot to perform turning or retreating actions.

It is also to be noted that the terms "include", "comprise", or any other variation thereof, are intended to cover a non-exclusive inclusion, such that a process, method, article, or apparatus that includes a list of elements does not include only those elements but may include other elements not expressly listed or inherent to such process, method, article, or apparatus. An element defined by the phrase "include a" does not, without more constraints, preclude the existence of additional identical elements in the process, method, article, or apparatus that includes the element.

## Claims

1. A multi-medium intelligent cleaning apparatus, for cleaning a working surface, comprising a self-propelled cleaning robot (1) and a safety protection apparatus connected to the self-propelled cleaning robot through a connecting member (3), the safety protection apparatus comprising an adsorption member (2) for adsorbing on a surface to be adsorbed, **characterised in that** the multi-medium intelligent cleaning apparatus further comprises an anti-collision member (4) arranged on the adsorption member, and the anti-collision member is protruded from an outer end edge of the adsorption member so as to prevent a foreign object from impacting the adsorption member.

2. The multi-medium intelligent cleaning apparatus according to claim 1, wherein a cross section of the anti-collision member and a cross section of the adsorption member are circular, and a diameter of the anti-collision member is larger than a diameter of the adsorption member.

3. The multi-medium intelligent cleaning apparatus according to claim 2, wherein the self-propelled cleaning robot comprises a movable bumper (12) and a first sensor connected to the movable bumper to generate a signal when the movable bumper shifts.

4. The multi-medium intelligent cleaning apparatus according to claim 3, wherein the anti-collision member is located at a location where the anti-collision member is able to abut against the movable bumper to enable the movable bumper to shift when the self-propelled cleaning robot approaches the adsorption member.

5. The multi-medium intelligent cleaning apparatus according to claim 4, wherein
a height of an upper surface of the movable bumper from the working surface is H1;
a height of a lower surface of the movable bumper from the working surface is H2;
a height of an upper surface of the anti-collision member from the surface to be adsorbed is H3; and
a height of a lower surface of the anti-collision member from the surface to be adsorbed is H4,
wherein H2 ≤ H3 ≤ H1, or H2 ≤ H4 ≤ H1.

6. The multi-medium intelligent cleaning apparatus according to claim 1, further comprising a fixing assembly (5) for detachably fixing the anti-collision member on the adsorption member.

7. The multi-medium intelligent cleaning apparatus according to claim 6, wherein the fixing assembly comprises a clamping portion (51) arranged on the adsorption member and a buckle portion (52) arranged on the anti-collision member.

8. The multi-medium intelligent cleaning apparatus according to claim 1, wherein the connecting member (3) is a safety rope, and the multi-medium intelligent cleaning apparatus further comprises a retracting member (6) fixed with the adsorption member and is used for retracting the safety rope.

9. The multi-medium intelligent cleaning apparatus according to claim 8, wherein the outer end edge of the adsorption member protrudes upwards to form a handle (21), and the handle drives the outer end edge of the adsorption member to be separated from the adsorption surface under an action of an external force of a user.

10. The multi-medium intelligent cleaning apparatus according to claim 8, wherein the anti-collision member is provided with a yielding groove (41) for yielding the handle.

11. The multi-medium intelligent cleaning apparatus according to claim 8, wherein a middle part of the handle is provided with a through hole for facilitating finger insertion of a user.

12. The multi-medium intelligent cleaning apparatus according to claim 1, wherein the self-propelled cleaning robot of the multi-medium intelligent cleaning apparatus is a glass cleaning robot or a solar panel cleaning robot.

13. The multi-medium intelligent cleaning apparatus according to claim 1, further comprising: a second sensor (42) for detecting, when the anti-collision member is subjected to a collision force, a magnitude of the collision force, and a control module connected to the second sensor, wherein
the control module is configured to control the self-propelled cleaning robot to stop working, turn or give an alarm when the collision force detected by the second sensor is greater than a threshold.

14. The multi-medium intelligent cleaning apparatus according to claim 13, wherein there are at least two second sensors uniformly distributed on a bearing surface of the anti-collision member.

15. A control method of a multi-medium intelligent cleaning apparatus, wherein the multi-medium intelligent cleaning apparatus comprises a self-propelled cleaning robot and a safety protection apparatus connected to the self-propelled cleaning robot through a connecting member, and the safety protection apparatus comprises an adsorption member for adsorbing on a surface to be adsorbed, **characterised in that** the control method comprises:
when an anti-collision member that is arranged on the adsorption member and protrudes from an outer end edge of the adsorption member is subjected to a collision force, determining a magnitude of the collision force based on a detection signal generated by a second sensor (101); and
when the collision force is greater than a threshold, controlling the self-propelled cleaning robot to stop working, turn or give an alarm (102).

16. The method according to claim 15, further comprising:
when a movable bumper of the self-propelled cleaning robot shifts due to collision, determining that the self-propelled cleaning robot collides with an obstacle based on a signal generated by a first sensor; and
controlling the self-propelled robot to perform turning or retreating actions.

## Patentansprüche

1. Eine mehr-Medium-intelligente-Reinigungsvorrichtung zum Reinigen einer Arbeitsfläche, welche einen Selbstantrieb-Reinigungsroboter (1) und eine Sicherheitsschutzvorrichtung aufweist, welche mit dem Selbstantrieb-Reinigungsroboter durch ein Verbindungselement (3) verbunden ist, wobei die Sicherheitsschutzvorrichtung ein Adsorptionselement (2) zum Adsorbieren auf einer zu-adsorbierenden Fläche aufweist, **dadurch gekennzeichnet, dass** die mehr-Medium-intelligente-Reinigungsvorrichtung weiter ein Antikollisionselement (4) aufweist, welches an dem Adsorptionselement angeordnet ist, und das Antikollisionselement von einem äußeres-Ende-Rand des Adsorptionselements hervorragt, um zu verhindern, dass ein Fremdobjekt auf das Adsorptionselement aufprallt.

2. Die mehr-Medium-intelligente-Reinigungsvorrichtung nach Anspruch 1, wobei ein Querschnitt des Antikollisionselements und ein Querschnitt des Adsorptionselements kreisförmig sind, und ein Durchmesser des Antikollisionselements größer ist als ein Durchmesser des Adsorptionselements.

3. Die mehr-Medium-intelligente-Reinigungsvorrichtung nach Anspruch 2, wobei der Selbstantrieb-Reinigungsroboter ein bewegbares Stoßteil (12) und einen ersten Sensor aufweist, welcher mit dem bewegbaren Stoßteil verbunden ist, um ein Signal zu generieren, wenn sich das bewegbare Stoßteil verschiebt.

4. Die mehr-Medium-intelligente-Reinigungsvorrichtung nach Anspruch 3, wobei das Antikollisionselement an einer Position positioniert ist, wo das Antikollisionselement fähig ist, gegen das bewegbare Stoßteil zu stoßen, um dem bewegbaren Stoßteil zu ermöglichen, sich zu verschieben, wenn sich der Selbstantrieb-Reinigungsroboter dem Adsorptionselement nähert.

5. Die mehr-Medium-intelligente-Reinigungsvorrichtung nach Anspruch 4, wobei eine Höhe einer oberen Fläche des bewegbaren Stoßteils von der Arbeitsfläche H1 ist; eine Höhe einer unteren Fläche des bewegbaren Stoßteils von der Arbeitsfläche H2 ist;
eine Höhe einer oberen Fläche des Antikollisionselements von der zu-adsorbierenden Fläche H3 ist; und
eine Höhe einer unteren Fläche des Antikollisionselements von der zu-adsorbierenden Fläche H4 ist,
wobei H2 ≤ H3 ≤ H1, oder H2 ≤ H4 ≤ H1.

6. Die mehr-Medium-intelligente-Reinigungsvorrichtung nach Anspruch 1, welche weiter eine Befestigungseinrichtung (5) zum abnehmbaren Befestigen des Antikollisionselements an dem Adsorptionselement aufweist.

7. Die mehr-Medium-intelligente-Reinigungsvorrichtung nach Anspruch 6, wobei die Befestigungseinrichtung einen Klemmabschnitt (51) aufweist, welcher an dem Adsorptionselement angeordnet ist, sowie einen Verschlussabschnitt (52), welcher an dem Antikollisionselement angeordnet ist.

8. Die mehr-Medium-intelligente-Reinigungsvorrichtung nach Anspruch 1, wobei das Verbindungselement (3) ein Sicherungsseil ist, und die mehr-Medium-intelligente-Reinigungsvorrichtung ferner ein Rückzugselement (6) aufweist, welches an dem Adsorptionselement befestigt ist und zum Zurückziehen des Sicherungsseils verwendet wird.

9. Die mehr-Medium-intelligente-Reinigungsvorrichtung nach Anspruch 8, wobei der äußeres-Ende-Rand des Adsorptionselements nach oben ragt, um einen Griff (21) zu bilden, und der Griff den äußeres-Ende-Rand des Adsorptionselements dazu treibt, von der Adsorptionsfläche unter Einwirken einer externen Kraft eines Nutzers getrennt zu werden.

10. Die mehr-Medium-intelligente-Reinigungsvorrichtung nach Anspruch 8, wobei das Antikollisionselement mit einer Einbringung-Aussparung (41) zum Einbringen des Griffs bereitgestellt ist.

11. Die mehr-Medium-intelligente-Reinigungsvorrichtung nach Anspruch 8, wobei ein mittlerer Teil des Griffs mit einem Durchgangsloch zum Vereinfachen des Fingereinsteckens eines Nutzers bereitgestellt ist.

12. Die mehr-Medium-intelligente-Reinigungsvorrichtung nach Anspruch 1, wobei der Selbstantrieb-Reinigungsroboter der mehr-Medium-intelligente-Reinigungsvorrichtung ein Glas-Reinigungs-Roboter oder ein Solarpanel-Reinigungs-Roboter ist.

13. Die mehr-Medium-intelligente-Reinigungsvorrichtung nach Anspruch 1, welche weiter aufweist: einen zweiten Sensor (42) zum Detektieren, wenn das Antikollisionselement einer Kollisionskraft ausgesetzt ist, einer Größe der Kollisionskraft, und ein Steuerungsmodul, welches mit dem zweiten Sensor verbunden ist, wobei
das Steuerungsmodul konfiguriert ist, um den Selbstantrieb-Reinigungsroboter zu steuern, um den Betrieb anzuhalten, zu drehen oder einen Alarm zu geben, wenn die mittels des zweiten Sensors detektierte Kollisionskraft größer ist als ein Schwellenwert.

14. Die mehr-Medium-intelligente-Reinigungsvorrichtung nach Anspruch 13, wobei zumindest zwei zweite Sensoren vorhanden sind, welche gleichmäßig an einer Lagerfläche des Antikollisionselements verteilt sind.

15. Ein Steuerungsverfahren einer mehr-Medium-intelligente-Reinigungsvorrichtung, wobei die mehr-Medium-intelligente-Reinigungsvorrichtung einen Selbstantrieb-Reinigungsroboter und eine Sicherheitsschutzvorrichtung aufweist, welche mit dem Selbstantrieb-Reinigungsroboter durch ein Verbindungselement verbunden ist, und die Sicherheitsschutzvorrichtung ein Adsorptionselement zum Adsorbieren auf einer zu-adsorbierenden Fläche aufweist, **dadurch gekennzeichnet, dass** das Steuerungsverfahren aufweist:
wenn ein Antikollisionselement, welches an dem Adsorptionselement angeordnet ist und von einem äußeres-Ende-Rand des Adsorptionselements hervorragt, einer Kollisionskraft ausgesetzt ist, Bestimmen einer Größe der Kollisionskraft basierend auf einem mittels eines zweiten Sensors (101) generierten Detektionssignal; und
wenn die Kollisionskraft größer ist als ein Schwellenwert, Steuern des Selbstantrieb-Reinigungsroboters, um den Betrieb anzuhalten, zu drehen oder einen Alarm (102) zu geben.

16. Das Verfahren nach Anspruch 15, welches weiter aufweist:
wenn sich ein bewegbares Stoßteil des Selbstantrieb-Reinigungsroboters aufgrund von Kollision verschiebt, Bestimmen, dass der Selbstantrieb-Reinigungsroboter mit einem Hindernis kollidiert basierend auf einem Signal, welches mittels eines ersten Sensors generiert wird; und
Steuern des Selbstantrieb-Roboters, um Dreh- oder Rückzugshandlungen durchzuführen.

## Revendications

1. Appareil de nettoyage intelligent multisupport, destiné à nettoyer une surface de travail, comprenant un robot de nettoyage autopropulsé (1) et un appareil de protection de sécurité connecté au robot de nettoyage autopropulsé par un élément de connexion (3), l'appareil de protection de sécurité comprenant un membre d'adsorption (2) destiné à adsorber sur une surface à adsorber,
**caractérisé en ce que**
l'appareil de nettoyage intelligent multisupport comprend en outre un élément anti-collision (4) agencé sur l'élément d'adsorption, et
l'élément anti-collision fait saillie à partir d'un bord d'extrémité extérieur de l'élément d'adsorption afin d'empêcher un corps étranger d'entrer en collision avec l'élément d'adsorption.

2. Appareil de nettoyage intelligent multisupport selon la revendication 1,
dans lequel la section transversale de l'élément anti-collision et la section transversale de l'élément d'adsorption, sont circulaires, et le diamètre de l'élément anti-collision est supérieur au diamètre de l'élément d'adsorption.

3. Appareil de nettoyage intelligent multisupport selon la revendication 2,
dans lequel le robot de nettoyage autopropulsé comprend un pare-chocs mobile (12), et un premier capteur connecté au pare-chocs mobile, afin de générer un signal lorsque le pare-chocs mobile se déplace.

4. Appareil de nettoyage intelligent multisupport selon la revendication 3,
dans lequel l'élément anti-collision se situe à un emplacement où l'élément anti-collision peut venir en butée contre le pare-chocs mobile afin de permettre au pare-chocs mobile de se déplacer lorsque le robot de nettoyage autopropulsé s'approche de l'élément d'adsorption.

5. Appareil de nettoyage intelligent multisupport selon la revendication 4, dans lequel
la hauteur de la surface supérieure du pare-chocs mobile à partir de la surface de travail est représentée par H1 ;
la hauteur de la surface inférieure du pare-chocs mobile à partir de la surface de travail est représentée par H2 ;
la hauteur de la surface supérieure de l'élément anti-collision à partir de la surface à adsorber est représentée par H3 ; et
la hauteur de la surface inférieure de l'élément anti-collision à partir de la surface à adsorber est représentée par H4 ;
dans lequel H2 ≤ H3 ≤ H1, ou H2 ≤ H4 ≤ H1.

6. Appareil de nettoyage intelligent multisupport selon la revendication 1, comprenant en outre un ensemble fixation (5) destiné à fixer de manière amovible l'élément anti-collision sur l'élément d'adsorption.

7. Appareil de nettoyage intelligent multisupport selon la revendication 6,
dans lequel l'élément fixation comprend une partie serrage (51) agencée sur l'élément d'adsorption, et une partie boucle (52) agencée sur l'élément anti-collision.

8. Appareil de nettoyage intelligent multisupport selon la revendication 1,
dans lequel l'élément de connexion (3) est un cordon de sécurité, et l'appareil de nettoyage intelligent multisupport comprend en outre un élément d'escamotage (6) fixé avec l'élément d'adsorption, et utilisé pour escamoter le cordon de sécurité.

9. Appareil de nettoyage intelligent multisupport selon la revendication 8,
dans lequel le bord d'extrémité extérieur de l'élément d'adsorption fait saillie vers le haut afin de former une poignée (21),
et la poignée entraîne le bord d'extrémité extérieur de l'élément d'adsorption à séparer de la surface d'adsorption sous l'action d'une force extérieure exercée par un utilisateur.

10. Appareil de nettoyage intelligent multisupport selon la revendication 8,
dans lequel l'élément anti-collision est doté d'une rainure souple (41) afin de fléchir la poignée.

11. Appareil de nettoyage intelligent multisupport selon la revendication 8,
dans lequel une partie médiane de la poignée est dotée d'un trou traversant destiné à faciliter l'insertion d'un doigt d'un utilisateur.

12. Appareil de nettoyage intelligent multisupport selon la revendication 1,
dans lequel le robot de nettoyage autopropulsé de l'appareil de nettoyage intelligent multisupport, est un robot de nettoyage de vitre ou un robot de nettoyage de panneau solaire.

13. Appareil de nettoyage intelligent multisupport selon la revendication 1, comprenant en outre :
un second capteur (42) destiné à détecter, lorsque l'élément anti-collision est soumis à une force de collision, la grandeur de la force de collision, et
un module de commande connecté au second capteur,
dans lequel le module de commande est configuré afin de commander le robot de nettoyage autopropulsé afin de faire cesser le fonctionnement, tourner ou déclencher une alarme, lorsque la force de collision détectée par le second capteur est supérieure à un seuil.

14. Appareil de nettoyage multisupport intelligent selon la revendication 13,
dans lequel il y a au moins deux seconds capteurs répartis uniformément sur une surface porteuse de l'élément anti-collision.

15. Procédé de commande d'un appareil de nettoyage intelligent multisupport,
dans lequel l'appareil de nettoyage intelligent multisupport comprend un robot de nettoyage autopropulsé et un appareil de protection de sécurité connecté au robot de nettoyage autopropulsé par un élément de connexion, et l'appareil de protection de sécurité comprend un élément d'adsorption (2) destiné à adsorber sur une surface à adsorber,
**caractérisé en ce que** le procédé de commande comprend les étapes suivantes :
quand un élément anti-collision qui est agencé sur l'élément d'adsorption et qui fait saillie à partir d'un bord d'extrémité extérieur de l'élément d'adsorption, est soumis à une force de collision, déterminer la grandeur de la force de collision sur la base d'un signal de détection généré par un second capteur (101) ; et
lorsque la force de collision est supérieure à un seuil, commander le robot de nettoyage autopropulsé afin de faire cesser le fonctionnement, tourner ou déclencher une alarme (102).

16. Procédé selon la revendication 15, comprenant en outre les étapes suivantes :
quand un pare-chocs mobile du robot de nettoyage autopropulsé se déplace suite à une collision,
déterminer que le robot de nettoyage autopropulsé entre en collision avec un obstacle sur la base d'un signal généré par un premier capteur ; et
commander le robot autopropulsé afin d'exécuter des actions de rotation ou de repli.
